# EUROPÄISCHE PATENTSCHRIFT

(11) **EP 1 076 006 B1**
(45) Veröffentlichungstag und Bekanntmachung des Hinweises auf die Patenterteilung: **17.03.2004**
(21) Anmeldenummer: 00115797.3
(22) Anmeldetag: 22.07.2000
(51) Int. Cl.: B65B 13/32, B23K 37/04

(54) **Schweisskopf für eine Bandumreifungsmaschine**
Welding head for a strap binding apparatus
Tête de soudage pour un appareil de fixation à courroie

(30) Priorität: 11.08.1999 DE 19937828
(43) Veröffentlichungstag der Anmeldung: 14.02.2001
(73) Patentinhaber: SMB SCHWEDE MASCHINENBAU GmbH, 95497 Goldkronach (DE)
(72) Erfinder:
(74) Vertreter: Hübner, Gerd, Dipl.-Phys.

(56) Entgegenhaltungen:
- EP-A- 0 890 510
- US-A- 3 648 739
- US-A- 3 654 033
- US-B1- 6 213 184

## Beschreibung

Die Erfindung betrifft einen Schweißkopf für eine Bandumreifungsmaschine mit den im Oberbegriff des Anspruches 1 angegebenen Merkmalen.

Derartige Schweißköpfe sind in vielerlei Ausführungsformen bekannt. Funktionell gemeinsam sind solchen Schweißköpfen ein Bandführungsteil zur Durchführung eines Umreifungsbandes durch den Schweißkopf, ein Bandfixierungselement zum Halten der zu verschweißenden, überlappenden Umreifungsbandabschnitte, ein Schweißaggregat zum Anschmelzen der zu verschweißenden Umreifungsbandabschnitte und eine Anpreßeinrichtung zum Zusammenführen der angeschmolzenen und zu verschweißenden Umreifungsbandabschnitte. Beispiele für solche bekannten Schweißköpfe sind in den deutschen Gebrauchsmustern DE 297 16 896 U1, DE 297 16 897 U1 und DE 297 16 898 U1 gezeigt.

Bei der Umreifung von dünnen, instabilen Stapeln von z.B. Druckprodukten kann nun der Produktstapel - wenn überhaupt - nur in sehr geringem Maße belastet werden, da er sich ansonsten wellen und zusammenfalten würde. Insoweit kann nur mit einer sehr geringen Bandrückspannung der Bandumreifungsmaschine gearbeitet werden. Da ferner das zu umreifende Produkt aufgrund seiner Instabilität kaum einen Widerstand gegen die Bandrückspannung leisten kann, wird im Umreifungsband selbst keine Dehnung erzeugt. Dies bedeutet, daß im Band inhärent keine Kontraktionskräfte vorhanden sind, was zur Folge hat, daß die im Schweißkopf befindlichen, überlappenden und miteinander verschweißten Umreifungsbandabschnitte sich im Bereich des sogenannten Bandverschlusses nicht durch Eigenaktion nach oben aus dem Schweißkopf herausheben. Die Umreifungsbandschlinge weist eine zu geringe Eigenspannung auf, um sicherzustellen, daß der Bandverschluß aus dem Schweißkopf austritt.

Zur Lösung dieser Problematik wurde bereits vorgeschlagen, das Umreifungsband mit Hilfe von Druckluft zu beaufschlagen und somit aus dem Schweißkopf zu blasen. Die hierfür notwendigen Luftdüsen sind dabei bekanntermaßen neben dem Schweißkopf angeordnet oder in diesen integriert. Sie bringen einen nicht unerheblichen konstruktiven Mehraufwand mit sich.

Der bei dieser Ausführungsform notwendige Druckluftanschluß verursacht ferner einen zusätzlichen Aufwand für die Versorgungsinfrastruktur der mit einem solchen Schweißkopf bestückten Bandumreifungsmaschine. Vielfach steht eine Druckluftquelle auch gar nicht zur Verfügung.

Ausgehend von dieser Problematik liegt der Erfindung die Aufgabe zugrunde, einen universell und ohne Druckluftanschluß einsetzbaren Schweißkopf für eine Bandumreifungsmaschine zu schaffen, bei dem der Austritt der verschweißten Umreifungsbandabschnitte aus dem Schweißkopf zuverlässig gewährleistet ist.

Diese Aufgabe wird durch einen in den Schweißkopf integrierten, mechanisch arbeitenden Auswerfer zum Ausheben des verschweißten Umreifungsbandes aus dem Schweißkopf gelöst.

Aufgrund der mechanischen Ausprägung des Auswerfers kann ein Druckluftanschluß entfallen. Dies bedingt auch eine geringere Geräuschbelästigung beim Betrieb der Maschine, da ein mechanischer Auswerfer gegenüber zischenden Druckluftdüsen weitaus geräuschärmer arbeiten kann. Schließlich ist ein mechanischer Auswerfer konstruktiv und steuerungstechnisch weitaus einfacher umzusetzen und arbeitet zuverlässiger.

Bevorzugte Ausführungsformen der Bandumreifungsmaschine ergeben sich aus den Unteransprüchen. Ein Ausführungsbeispiel der Erfindung wird ferner in der nachfolgenden Beschreibung unter Bezugnahme auf die beigefügten Zeichnungen näher erläutert. Es zeigen:
- Fig. 1: eine schematische Seitenansicht eines Schweißkopfes in Grundstellung des Auswerfers,
- Fig. 2: einen Schnitt durch den Schweißkopf entlang der Schnittlinie II-II nach Fig. 1, und
- Fig. 3 bzw. 4: Darstellungen analog Fig. 1 bzw. 2 jeweils in Auswurfstellung des Auswerfers.

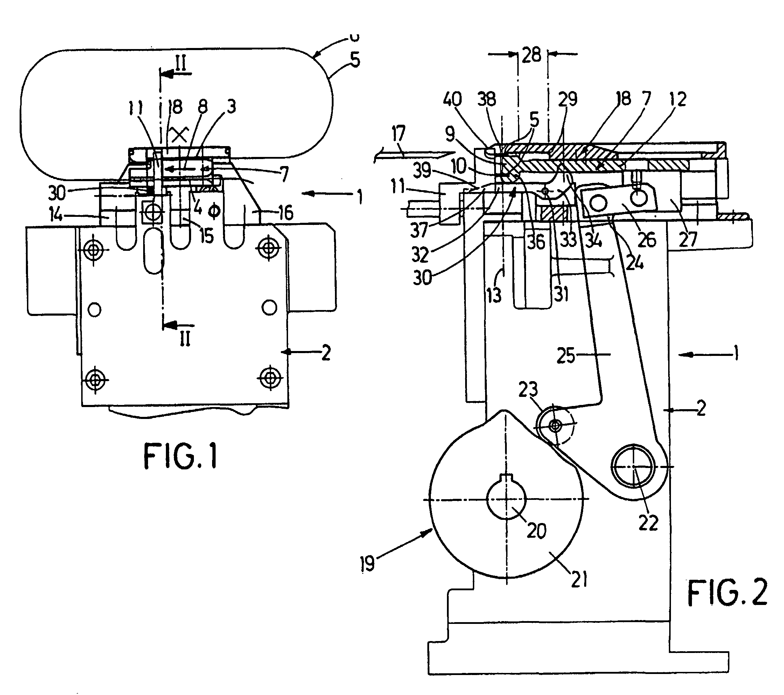

In den beigefügten Fig. 1 bis 4 ist der Schweißkopf 1 lediglich in seinen für die vorliegende Erfindung relevanten Teilen gezeigt. Grundsätzlich ist er mit einem nur angedeuteten Gehäuse 2 versehen, in dem funktionsrelevante Konstruktionsteile in bekannter Weise gelagert und geführt sind. Hierzu gehören insbesondere die nur teilweise erkennbaren Klemmbacken 14, 15 zur Beaufschlagung der durch den Schweißkopf 1 geführten Umreifungsbandabschnitte 3, 4 (Fig. 1) des als Ganzen mit 5 bezeichneten Umreifungsbandes. Letzteres wird über eine nicht näher dargestellte Einschießvorrichtung von einem Bandvorrat abgezogen und durch den Schweißkopf 1 in einen ebenfalls nicht näher dargestellten Bandführungsrahmen eingeführt, der das Umreifungsband 5 zu einer losen Schlinge 6 um den zu umreifenden Stapel herumführt, bis das vorlaufenden Ende am Umreifungsbandabschnitt 3 wieder in den Schweißkopf 1 gelangt. Der Aufbau eines Schweißkopfes 1 ist in dieser Hinsicht Stand der Technik, wie er beispielsweise in der eingangs angegebenen DE 297 16 896 U1 beschrieben ist.

Für die Durchführung des Umreifungsbandes 5 durch den Schweißkopf 1 ist in erster Linie ein Bandführungsteil 7 verantwortlich, dessen in Durchführungsrichtung 8 verlaufender Kopf 9 einen seitlich offenen Führungsschlitz 10 für das Umreifungsband 5 aufweist. In diesem Führungsschlitz 10 läuft das Umreifungsband 5 beim Einschießen durch den Schweißkopf 1. Gegen ein seitliches Austreten des Umreifungsbandes 5 sichert ein Führungsfinger 11 (Fig. 2), der vor der offenen Seite des Führungsschlitzes 10 im Kopf 9 des Bandführungsteils 7 steht. Der Bandführungsteil 7 weist zur Lagerung des Kopfes 9 einen flachen Schaft 12 auf, der in einer Führungsnut (nicht dargestellt) im Gehäuse 2 quer zur Umreifungsebene 13 verschiebbar geführt ist. Neben den Klemmbacken 14, 15 ist ferner ein Schneidbacken 16 vorgesehen, mittels dem in bekannter Weise die Umreifungsbandschlinge 6 nach dem Verschweißen der Umreifungsbandabschnitte 3, 4 vom einlaufenden Bandvorrat abtrennbar ist. Das eigentliche Schweißaggregat ist durch eine Schweißzunge 17 realisiert, die von der Seite her zwischen die beiden Umreifungsbandabschnitte 3, 4 einschiebbar ist. Dies erfolgt nach dem Bilden und Straffziehen der Schlinge 6, wobei synchron mit dem Einfahren der Schweißzunge 17 zwischen die Umreifungsbandabschnitte 3, 4 das Bandführungsteil 7 in die entgegengesetzte Richtung ausgeschoben wird. Dadurch wird der im Führungsschlitz 10 laufende Umreifungsbandabschnitt 4 freigegeben und kann durch den Klemmbacken 15 unter Zwischenlage der Schweißzunge 17 gegen den oben liegenden Umreifungsbandabschnitt 3 gepreßt werden. Als Gegenlager dient dabei die den oberen Abschluß des Schweißkopfes 1 bildende Druckplatte 18, die parallel zum Bandführungsteil 7 verschiebbar am Gehäuse 2 gelagert ist.

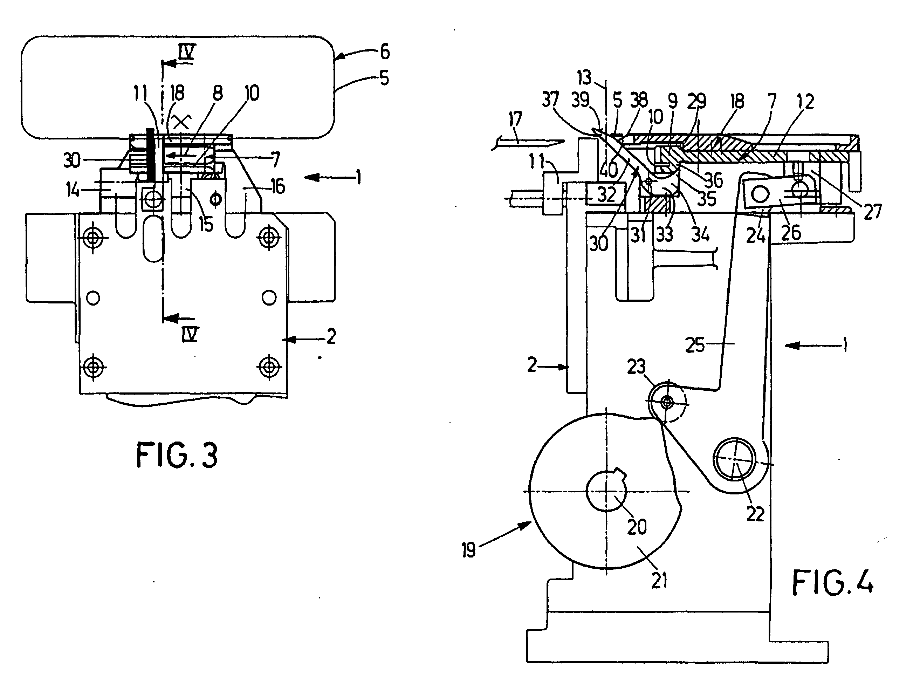

Der zeitlich gesteuerte Antrieb der einzelnen Funktionsteile des Schweißkopfes 1 erfolgt über eine Nockensteuerung 19, von der in Fig. 2 und 4 lediglich die Nockenwelle 20 und eine Nockenscheibe 21 dargestellt sind. Letztere dient zum Antrieb des Bandführungsteiles 7 und der Druckplatte 18 beim seitlichen Ausschwenken während des Verschweißvorganges und danach. Die Nockenscheibe 21 steht dabei einem einarmigen Übertragungshebel 25 gegenüber, der mit einer Folgerrolle 23 der Umfangskurve der Nockenscheibe 21 folgt und um eine Achse 22 schwenkbar gelagert ist. Das freie Ende 24 des Übertragungshebels 25 ist über einen Zwischenlenker 26 an einer Lasche 27 am rückwärtigen Ende des Schaftes 12 des Bandführungsteils 7 angelenkt. Die Nockensteuerung 19 mit dem Übertragungshebel 25 dient so zum unmittelbaren Antrieb des Bandführungsteils 7 und mittelbar der Druckplatte 18. Diese wird nach Durchlaufen einer Basisauslenkstrecke 28 des Bandführungsteils 7 nämlich durch Anschlagen dessen Kopfes 9 an eine Schulter 29 an der Unterseite der Druckplatte 18 in Auslenkrichtung mitgezogen und damit ebenfalls seitlich ausgerückt.

Kern der vorliegenden Erfindung ist ein unterhalb des Bandführungsteils 7 angeordneter, dieses flankierender Auswerferhebel 30, der doppelarmig ausgeführt und um eine parallel zur Durchführungsrichtung 8 des Umreifungsbandes 5 seitlich versetzt dazu liegende Schwenkachse 31 verschwenkbar ist. Der zur Umreifungsbandebene 13 hinweisende Arm 32 stellt mit seinem freien Ende 37 den eigentlichen Auswerfer dar, der in Grundstellung (Fig. 1, 2) im wesentlichen horizontal angeordnet ist. Der zweite Arm 33 des Auswerferhebels 30 ist an seinem Antriebsende 34 hakenförmig in die Bewegungsbahn des Bandführungsteils 7 hineingebogen ausgebildet und ist damit durch das Bandführungsteil 7 während dessen Ausrückbewegung beaufschlagbar. Damit ist also auch der Auswerferhebel 30 mittelbar in noch näher zu erläuternder Weise über die Nockensteuerung 19 antreibbar. Wie aus Fig. 1 deutlich wird, liegt der Auswerferhebel 30 im übrigen neben dem Führungsfinger 11 bezogen auf die Durchführungsrichtung 8.

Die Funktionsweise des Schweißkopfes 1 während des Verschweißens und danach ist wie folgt zu erläutern:

In der in Fig. 1 und 2 gezeigten Grundstellung des Schweißkopfes 1 ist das Umreifungsband 5 durch den Führungsschlitz 10 des Bandführungsteils 7 eingeführt und als lose Schlinge 6 um das zu umreifende Gut wieder bis in den Schweißkopf 1 zurückgeführt. Die Umreifungsbandabschnitte 3, 4 werden durch die Klemmbacken 14, 15 fixiert, wonach mit Hilfe der Nokkensteuerung 19 das Bandführungsteil 7 um die Basisauslenkstrecke 28 nach rechts bezüglich Fig. 2 ausgelenkt wird. Druckplatte 18 und Auswerferhebel 30 bleiben dabei noch in der in Fig. 1 und 2 gezeigten Grundstellung. Die Schweißzunge 17 fährt - ebenfalls angetrieben über eine Nockensteuerung 19 - zwischen die beiden Umreifungsbandabschnitte 3, 4 ein, schmilzt diese an und wird wieder in die in Fig. 2 gezeigte Grundstellung zurückgezogen. Unmittelbar danach werden mit Hilfe des Klemmbackens 15 die beiden Umreifungsbandabschnitte 3, 4 aufeinander und von unten gegen die Druckplatte 18 gepreßt. Damit wird der Bandverschluß zwischen den Umreifungsbandabschnitten 3, 4 gebildet und fixiert. Bei der weiteren Drehbewegung der Nockenscheibe 21 läuft die Folgerrolle 23 auf die Nase 35 der Nockenscheibe 21 auf, wodurch der Übertragungshebel 25 weiter im Uhrzeigersinn bezüglich Fig. 2 und 4 verschwenkt wird. Damit wird das Bandführungsteil 7 über die Basisauslenkstrecke 28 weiter hinausgezogen und nimmt die Druckplatte 18 in ihre Ausrückstellung seitlich außerhalb der Umreifungsebene 13 mit. Dabei schlägt auch die untere Hinterkante 36 des Kopfes 9 des Bandführungsteils 7 an das hakenförmig einwärts gebogene Antriebsende 34 des Auswerferhebels 30 an, wodurch dieser um seine Schwenkachse 31 im Uhrzeigersinn verschwenkt wird. Der Auswerferhebel 30 hebt damit das verschweißte Umreifungsband 5 aus dem Schweißkopf 1 nach oben aus, womit das umreifte Paket ohne Hindernisse vom Arbeitstisch der Umreifungsbandmaschine abtransportiert werden kann.

Das Freiwerden des Umreifungsbandes 5 wird im übrigen noch dadurch unterstützt, daß sowohl das freie Ende 37 des Armes 32 als auch das zur Umreifungsebene 13 hinweisende Vorderende 38 der Druckplatte 18 mit einer nach oben weisenden Abstreifschräge 39, 40 versehen sind. Damit wird das Umreifungsband 5 bei der Aushebebewegung von der Abstreifschräge 39 des Auswerfhebels 30 gleiten und sich auf die Abstreifschräge 40 der Druckplatte 18 legen, wie dies in Fig. 4 gezeigt ist. Beim anschließenden Zurückführen des Auswerferhebels 30 und der Druckplatte 18 in die Grundstellung untergreift die Abstreifschräge 40 der Druckplatte 18 das Umreifungsband 5 und hebt den Bandverschluß über die Druckplatte 18.

Zusammenfassend bildet der Auswerferhebel 40 mit seinem mittelbaren Schwenkantrieb über die Nockensteuerung 19 einen in den Schweißkopf 1 integrierten, mechanisch arbeitenden Auswerfer zum Ausheben des verschweißten Umreifungsbandes 5 aus dem Schweißkopf 1.

## Patentansprüche

1. Schweißkopf für eine Bandumreifungsmaschine mit
- einem Bandführungsteil (7) zur Durchführung eines Umreifungsbandes (5) durch den Schweißkopf (1),
- einem Bandfixierungselement (14) zum Halten der zu verschweißenden, überlappenden Umreifungsbandabschnitte (3, 4),
- einem Schweißaggregat (17) zum Anschmelzen der zu verschweißenden Umreifungsbandabschnitte (3, 4), und
- einer Anpreßeinrichtung (15) zum Zusammenführen der angeschmolzenen und zu verschweißenden Umreifungsbandabschnitte (3,4),
**gekennzeichnet durch**
- einen in den Schweißkopf (1) integrierten, mechanisch arbeitenden Auswerfer (30) zum Ausheben des verschweißten Umreifungsbandes (5) aus dem Schweißkopf (1).

2. Schweißkopf nach Anspruch 1, **dadurch gekennzeichnet, daß** der Auswerfer durch einen Auswerferhebel (30) gebildet ist, der seitlich der Umreifungsebene (13) um eine parallel zur Durchführungsrichtung (8) des Umreifungsbandes (5) durch den Schweißkopf (1) verlaufende Schwenkachse (31) drehbar gelagert ist und dessen freies Ende (37) das Umreifungsband (5) beim Ausheben aus dem Schweißkopf (1) untergreift.

3. Schweißkopf nach Anspruch 2, **dadurch gekennzeichnet, daß** der Auswerferhebel (30) über eine Nockensteuerung (19) des Schweißkopfes (1) antreibbar ist.

4. Schweißkopf nach einem der Ansprüche 1 bis 3 umfassend ferner ein zum Verschweißen und Ausheben des Umreifungsbandes (5) seitlich ausrückbares Bandführungsteil (7), **dadurch gekennzeichnet, daß** der Auswerfer (30) mittelbar über den Antrieb des Bandführungsteils (7) betätigbar ist.

5. Schweißkopf nach Anspruch 4, **dadurch gekennzeichnet, daß** der Auswerferhebel (30) als doppelarmiger Hebel ausgebildet und das Bandführungsteil (7) flankierend angeordnet ist, wobei der Auswerferhebel (30) an seinem dem freien Ende (37) entgegengesetzten Antriebsende (34) vom Bandführungsteil (7) zum Schwenkantrieb beaufschlagbar ist.

6. Schweißkopf nach Anspruch 5, **dadurch gekennzeichnet, daß** das Antriebsende (34) hakenförmig in die Bewegungsbahn des Bandführungsteils (7) hineingebogen ausgebildet ist.

7. Schweißkopf nach einem der Ansprüche 1 bis 6, ferner umfassend eine den Schweißkopf (1) nach oben abschließende, zum Ausheben des verschweißten Umreifungsbandes (5) seitlich ausrückbare Druckplatte (18), **dadurch gekennzeichnet, daß** der dem Umreifungsband (5) zugewandte Rand (38) der Druckplatte (18) und/oder das freie Ende (37) des Auswerfers (30) als Abstreifschräge (39, 40) ausgebildet sind.

## Claims

1. A welding head for a looping machine, comprising
- a strap guide (7) for passing a looping strap (5) through the welding head (1);
- a strap fixing element (14) for holding the lapping strap sections (3, 4) which are to be welded together;
- a welding set (17) for melting the strap sections (3, 4) which are to be welded together; and
a pressing arrangement (15) for joining the melted strap sections (3, 4) which are to be welded together;
**characterized by**
- a mechanically operating ejector (30), which is integrated into the welding head (1), for lifting the welded looping strap (5) out of the welding head (1).

2. A welding head according to claim 1, **characterized in that** the ejector is formed by an ejection lever (30) which is mounted laterally of the looping plane (13) and is pivotal about a pivot axis (31) which extends in parallel to the direction of passage (8) of the looping strap (5) through the welding head (1), and the free end (37) of which backs up the looping strap (5) when it is lifted out of the welding head (1).

3. A welding head according to claim 2, **characterized in that** the ejection lever (30) is actuated via a cam control (19) of the welding head (1).

4. A welding head according to one of claims 1 to 3, further comprising a strap guide (7) which is laterally deflectable for the welding and lifting of the looping strap (5), **characterized in that** the ejector (30) is actuated indirectly via the drive of the strap guide (7).

5. A welding head according to claim 4, **characterized in that** the ejection lever (30) is a double-armed lever flanking the strap guide (7), the ejection lever (30), by its driving end (34) opposite to the free end (37), being actuated by the strap guide (7) for pivoting actuation.

6. A welding head according to claim 5, **characterized in that** the driving end (34) is bent in the form of a hook into the motion travel of the strap guide (7).

7. A welding head according to one of claims 1 to 6, further comprising a pressure plate (18) which limits the welding head (1) upwards and is laterally deflectable for lifting the welded looping strap (5), **characterized in that** the edge (38), facing the looping strap (5), of the pressure plate (18) and/or the free end (37) of the ejector (30) form a stripping slope (39, 40).

## Revendications

1. Tête de soudage pour une enrubaneuse à bande avec
une partie de guidage de bande (7) pour la réalisation d'une bande d'enrubaneuse (5) à travers la tête de soudage (1),
un élément de fixation de bande (14) pour la fixation des segments de bande d'enrubaneuse (3, 4) se chevauchant, à souder,
un groupe de soudage (17) pour la fusion des segments de bande d'enrubaneuse (3, 4) à souder, et
un dispositif de pression (15) pour l'assemblage des segments de bande d'enrubaneuse (3, 4) fondus et à souder, **caractérisée par**
un éjecteur mécanique intégré dans la tête de soudage (1) pour le retrait de la bande d'enrubaneuse (5) soudée de la tête de soudage (1).

2. Tête de soudage selon la revendication 1, **caractérisée en ce que** l'éjecteur est formé par un levier d'éjecteur (30) qui est logé de façon rotative sur le côté du plan d'enrubaneuse (13) autour d'un axe pivotant (31) s'étendant parallèlement au sens de réalisation (8) de la bande d'enrubaneuse (5) à travers la tête de soudage (1), et dont l'extrémité (37) libre saisit la bande d'enrubaneuse (5) lors du retrait de la tête de soudage (1).

3. Tête de soudage selon la revendication 2, **caractérisée en ce que** le levier d'éjecteur (30) peut être commandé par l'intermédiaire d'une commande à came (19) de la tête de soudage (1).

4. Tête de soudage selon l'une des revendications 1 à 3 comprenant de plus une partie de guidage de bande (7) débrayable latéralement pour le soudage et le retrait de la bande d'enrubaneuse (5), **caractérisée en ce que** l'éjecteur (30) peut être actionné indirectement via l'entraînement de la partie de guidage de bande (7).

5. Tête de soudage selon la revendication 4, **caractérisée en ce que** le levier d'éjecteur (30) est configuré comme un levier à double bras et la partie de guidage de bande (7) est disposée sur les côtés, moyennant quoi le levier d'éjecteur (30) peut être admis sur son extrémité d'entraînement (34) opposée à l'extrémité libre (37) de la partie de guidage de bande (7) à l'entraînement pivotant.

6. Tête de soudage selon la revendication 5, **caractérisée en ce que** l'extrémité d'entraînement (34) est configurée incurvée vers l'intérieur en forme de crochet dans la trajectoire de mouvement de la partie de guidage de la bande (7).

7. Tête de soudage selon l'une des revendications 1 à 6, comprenant de plus une plaque d'appui (18) débrayable latéralement pour le retrait de la bande d'enrubaneuse soudée (5), terminant vers le haut la tête de soudage (1), **caractérisée en ce que** le bord (38) tourné vers la bande d'enrubaneuse (5) de la plaque d'appui (18) et/ou l'extrémité libre (37) de l'éjecteur (30) sont configurés comme des chanfreins racleurs (39, 40).
